Europäisches Patentamt

European Patent Office

Office européen des brevets

(19)

(11) **EP 1 317 060 A2**

(12) **EUROPÄISCHE PATENTANMELDUNG**

(43) Veröffentlichungstag:
04.06.2003 Patentblatt 2003/23

(51) Int Cl.⁷: **H02P 21/00**

(21) Anmeldenummer: 02025397.7

(22) Anmeldetag: **14.11.2002**

(84) Benannte Vertragsstaaten:
**AT BE BG CH CY CZ DE DK EE ES FI FR GB GR IE IT LI LU MC NL PT SE SK TR**
Benannte Erstreckungsstaaten:
**AL LT LV MK RO SI**

(30) Priorität: **27.11.2001 US 334867 P**
**14.02.2002 DE 10206191**

(71) Anmelder: **SIEMENS AKTIENGESELLSCHAFT**
**80333 München (DE)**

(72) Erfinder:
• **Georg, Klaus**
**97616 Salz (DE)**
• **Künzel, Stefan**
**91056 Erlangen (DE)**
• **Papiernik, Wolfgang, Dr.**
**91077 Neunkirchen (DE)**

(54) **Feldorientierte Regelung einer permanenterregten Synchronmaschine mit Reluktanzmoment**

(57)     Die Erfindung bezieht sich auf ein Verfahren zur feldorientierten Regelung einer permanenterregten Synchronmaschine mit Reluktanzmoment. Erfindungsgemäß erzeugen eine einzuprägende feldbildende Stromkomponente ($i^*_d$) zusätzlich eine einzuprägende reluktanzbehaftete drehmomentbildende Stromkomponente ($i^*_{qREL}$) und diese Stromkomponente ($i^*_{qREL}$) eine einzuprägende reluktanzbehaftete feldbildende Striomkomponente ($i^*_{dREL}$), wobei diese einzuprägende reluktanzbehaftete feldbildende Stromkomponente ($i^*_{dREL}$) oder eine verminderte Stromkomponente ($i_{dUmax}$) als einzuprägende feldbildende Stromkomponente ($i^*_d$) ausgegeben wird. Somit ist das erfindungsgemäß modifizierte feldorientierte Verfahren bei einer permanenterregten Synchronmaschine mit Reluktanzmoment zur deren Regelung verwendbar, wobei die Leistungsausbeute dieser Synchronmaschine maximiert wird.

FIG 2

EP 1 317 060 A2

**Beschreibung**

Die Erfindung bezieht sich auf ein Verfahren zur feldorientierten Regelung einer permanenterregten Synchronmaschine mit Reluktanzmoment.

Hauptspindelantriebe von Werkzeugmaschinen weisen einen großen Drehzahlstellbereich mit einem weiten Bereich konstanter Leistung auf. Standardmäßig werden hierbei Asynchronmotoren verwendet, die nach dem Prinzip der Feldorientierung geregelt werden und einen großen Feldschwächbereich aufweisen. In diesem Feldschwächbereich wird mit zunehmender Drehzahl die feldbildende Stromkomponente reduziert. Neben diesen feldorientiert betriebenen Asynchronmmaschinen mit großem Feldschwächbereich werden bei Werkzeugmaschinen auch permanenterregte Synchronmaschinen eingesetzt. Da mit permanenterregten Synchronmaschinen kein direkter Feldschwächbetrieb möglich ist, ist diese Motorart bislang nur in Vorschubbereich anzutreffen.

Allerdings kann auch bei der permanenterregten Synchronmaschine der Drehzahlbereich nach oben erweitert werden, wenn man im oberen Drehzahlbereich einen feldentgegenwirkenden Strom einprägt. Dieser Strom erzeugt einen Spannungsabfall an der Motorinduktivität, der der induzierten Spannung entgegengerichtet ist und damit die Klemmenspannung des Motors verkleinert. Einige der Motoren, die für diese Betriebsart ausgelegt sind, weisen zu dem auch ein Reluktanzmoment auf. Berücksichtigt man diese Eigenschaft bei der feldorientierten Regelung, so kann man das Motormoment bei gleichem Maximalstrom und -spannung zum Teil deutlich steigern. Dazu benötigt man auch im unteren Drehzahlbereich eine feldentgegenwirkende Stromkomponente.

Reluktanzmomente treten auf, wenn sich die Induktivitäten in Feldrichtung und senkrecht dazu unterscheiden. Bei einer Synchronmaschine, bei der die q- und d-Induktivität unterschiedlich sind, ist der Läufer nicht rotationssymmetrisch. Bei einer Synchronmaschine mit innenliegenden Magneten unterscheiden sich die q- und d-Induktivität. Außerdem ist der Rotor wegen der innenliegenden Magneten nicht rotationssymmetrisch.

In der Veröffentlichung "Permanenterregte Hauptspindelantriebe für Werkzeugmaschinen mit großem Feldschwächbereich" von S. Künzel und W. Papiernik, abgedruckt im Tagungsband der Nürnberger Messe "SPS/IPC/DRIVES", Nov. 1998, sind für permanenterregte Synchronmotoren mit Reluktanzmoment theoretische Überlegungen veröffentlicht, die die theoretische Maximalleistung in den verschiedenen Betriebspunkten aufweist und der Synchronmaschine ohne Reluktanzmoment gegenüberstellt. In dieser Veröffentlichung sind neben Formeln und Zeigerdiagrammen auch ein Blechschnitt eines 6-poligen permanenterregten Synchronmotors mit innenliegenden Magneten dargestellt, die dadurch einen nicht rotationssymmetrischen Läufer aufweist. Gemäß dieser Veröffentlichung wird der gesamte Betriebsbereich einer permanenterregten Synchronmaschine mit Reluktanzmoment in drei Bereiche unterteilt, die aufgrund von Strom- und Spannungsbegrenzung unterschiedliche Optimierungskriterien für die Leistungsmaximierung erfordern.

Im untersten Drehzahlbereich spielt nur die Strombegrenzung eine Rolle. Hier ist der optimale Betriebspunkt der, bei dem das gewünschte Drehmoment mit kleinstmöglichem Strom bzw. das maximale Drehmoment bei Maximalstrom erreicht wird. In den beiden nächsten Bereichen spielt die Spannungsbegrenzung eine wesentliche Rolle. In diesen Bereichen wird das maximale Drehmoment erreicht, wenn der Motor in der Spannungsbegrenzung betrieben wird. Um das maximale Drehmoment zu erzielen, muss im zweiten Bereich zusätzlich der Maximalstrom eingeprägt werden, während im dritten Bereich das Optimum nicht bei Maximalstrom erreicht wird. Je nach Strombegrenzung kann auch der dritte Bereich wegfallen.

Bei einer Synchronmaschine mit im Läufer versenkten Magneten verändern sich die Motorinduktivitäten in d- und q-Richtung aufgrund der Eisensättigung stark stromabhängig. Deshalb ist eine Vorabberechnung der Kennlinie für die d-Stromkomponente wie sie in der erwähnten Veröffentlichung vorgeschlagen wird, ungünstig, da sich die entscheidenden Motordaten stromabhängig verändern. Ein robustes Verfahren wird nur erzielt, wenn man auf die aktuellen Motorspannungen reagiert. Außerdem muss im oberen Drehzahlbereich mit Maximalspannung gearbeitet werden. Hier muss ein Verfahren zur Stromregelung verwendet werden, das in der Spannungsbegrenzung noch wirksam bleibt.

Aus der EP 0 840 441 A1 ist eine feldorientierte Regelung einer permanenterregten Synchronmaschine mit aufgesetzten Magneten bekannt. Gemäß dieser europäischen Offenlegungsschrift ist eine bekannte feldorientierte Regelung dahingehend erweitert worden, dass die erzeugten Spannungskomponenten in und senkrecht zur Flussrichtung des Läuferflusses betragsmäßig überwacht werden und bei Überschreitung vorbestimmter Grenzwerte ein Verringerungswert für die einzuprägenden drehmoment- und flussbildenden Stromkomponenten erzeugt werden. D. h., so bald die Spannungskomponente in Flussrichtung betragsmäßig an die Spannungsbegrenzung, welche beispielsweise den maximal verfügbare Ausgangsspannung darstellt, gelangt, eine betragsmäßige Verringerung der drehmomentbildende Stromkomponente (Stromkomponente senkrecht zur Flussrichtung) vorgenommen wird, wodurch eine Spannungsreserve gebildet wird. Ähnliches gilt für die Spannungskomponente senkrecht zur Flussrichtung. Sobald diese Spannungskomponente betragsmäßig an deren Spannungsbegrenzung gelangt, wird die feldbildende Stromkomponente (Stromkomponente in Flussrichtung) verkleinert, wodurch sich diese Spannungskomponente von der Spannungsbegrenzung löst. Für den Fall einer permanenterregten Synchronmaschine bedeutet dies, dass der bereits negative Wert von der flussbildenden Stromkomponente weiter in den negativen Bereich verkleinert wird, also einen noch negativeren Wert annimmt. Bei der permanenterregten Synchronmaschine mit aufgesetzten Magneten wird die bei Spannungsbegrenzung maximale Leistung dann erreicht, wenn die Spannungskomponente senkrecht zur Flussrichtung Null wird. Dann steht nämlich die gesamte Spannung für den Spannungsabfall aufgrund des momentbildenden Stromes zur Verfügung.

Wie eine feldorientierte Regelung einer permanenterregten Synchronmaschine mit innenliegenden Magneten aussehen könnte, ist dieser europäischen Patentanmeldung nicht entnehmbar. Behandelt werden nur die Asynchronmaschine und die permanenterregte Synchronmaschine ohne Reluktanzmoment.

Das Verfahren der EP 0 840 441 A1 beeinflusst ausgehend von der Spannung in d-Richtung den momentenbildenden Stromsollwert (q-Stromsollwert) und ausgehend von der Spannung in q-Richtung den feldbildenden Stromsollwert. Dazu wird die d-Spannungskomponente jeweils mit einem Spannungssollwert verglichen und jeweils ein Regler, die auch als d- und q-Spannungsmaximumregler bezeichnet werden, nimmt die Veränderung der Stromsollwerte vor. Der Sollwert für die q-Spannungskomponente wird lastabhängig verkleinert, maximal bis Null.

In der eingangs genannten Veröffentlichung wird neben der permanenterregten Synchronmaschine ohne Reluktanzmoment auch die permanenterregte Synchronmaschine mit Reluktanzmoment behandelt. Ein wesentlicher Nachteil dieser Synchronmaschine mit Reluktanzmoment ist der, dass nun diese Maschine im hohen Maße ein nichtlineares Verhalten zeigt. Dadurch lassen sich keine einfachen geschlossenen Gleichungen für die fluss- und drehmomentbildenden Stromkomponenten als Funktion eines angeforderten Drehmomentes mehr angeben. Außerdem ist dieser Veröffentlichung nicht zu entnehmen, wie mit geeigneten Näherungsverfahren (Tabellen, Polynome) die feldorientierte Regelung der EP 0 840 441 A1 derart modifiziert werden kann, damit diese feldorientierte Regelung auch auf permanenterregte Synchronmaschinen mit Reluktanzmoment angewendet werden kann.

Der Erfindung liegt deshalb die Aufgabe zugrunde, dass bekannte Verfahren zur feldorientierten Regelung derart weiterzubilden, dass damit eine permanenterregte Synchronmaschine mit Reluktanzmoment derart betrieben werden kann, dass deren Leistungsausbeute in allen Betriebsbereichen maximal ist.

Diese Aufgabe wird erfindungsgemäß mit den im Anspruch 1 angegebenen Verfahrensschritten gelöst.

Dadurch, dass nun zusätzlich die einzuprägende feldbildende Stromkomponente eine drehmomentbildende Stromkomponente und umgekehrt erzeugt, kann das so modifizierte Verfahren zur feldorientierten Regelung einer permanenterregten Synchronmaschine mit Reluktanzmoment verwendet werden. Somit ist das erfindungsgemäße Verfahren neben der bekannten Generierung von Verringerungswerten auch noch durch eine geschlossene Stromschleife zwischen den beiden Stromkomponenten in und senkrecht zur Flussrichtung des Läuferflusses gekennzeichnet. Dadurch kann mit betragsmäßig gleichem Strom ein deutlich höheres Drehmoment erzeugt werden.

Bei einer vorteilhaften Ausführungsform des erfindungsgemäßen Verfahrens werden die vorbestimmten Spannungswerte für die Spannungskomponenten in und senkrecht zur Flussrichtung des Läuferflusses derart korrigiert, dass deren vektorielle Addition einen Maximalwert ergeben. Somit sind die beiden Regelkanäle für die beiden Spannungskomponenten eines Ständerspannungs-Raumzeigers der permanenterregten Synchronmaschine miteinander verknüpft, wodurch verhindert wird, dass bei der Behandlung der beiden Spannungskomponenten als Einzelgrößen der daraus zusammengesetzte Ständerspannungs-Raumzeiger keinen maximalen Betrag aufweist. Erst mit Erreichen der Maximalspannung wird auch ein maximales Drehmoment gefunden.

Bei einer weiteren vorteilhaften Ausführungsform des erfindungsgemäßen Verfahrens wird anstelle der einzuprägenden drehmomentbildenden Stromkomponente die drehmomentbildende Stromkomponente des ermittelten Ständerstrom-Raumzeigers der permanenterregten Synchronmaschine verwendet. Dadurch wird bei der Erzeugung der zweiten einzuprägenden feldbildenden Stromkomponente das tatsächlich in der Maschine vorhandene Moment verwendet, wodurch dieses Moment indirekt auch zur Berechnung der weiteren einzuprägenden drehmomentbildenden Stromkomponente, die dem Reluktanzmoment entspricht, herangezogen wird.

Zur weiteren Erläuterung der Erfindung wird auf die Zeichnung Bezug genommen, in der mehrere Ausführungsformen von Vorrichtung zur Durchführung von erfindungsgemäßen Verfahren schematisch veranschaulicht sind.

FIG 1    zeigt die Regelstruktur einer bekannten feldorientierten Regelung einer Drehfeldmaschine, wobei in der
FIG 2    eine erste Vorrichtung zur Durchführung eines erfindungsgemäßen Verfahrens veranschaulicht ist und die
FIG 3    eine zweite Vorrichtung zur Durchführung einer Variante des erfindungsgemäßen Verfahrens veranschaulicht.

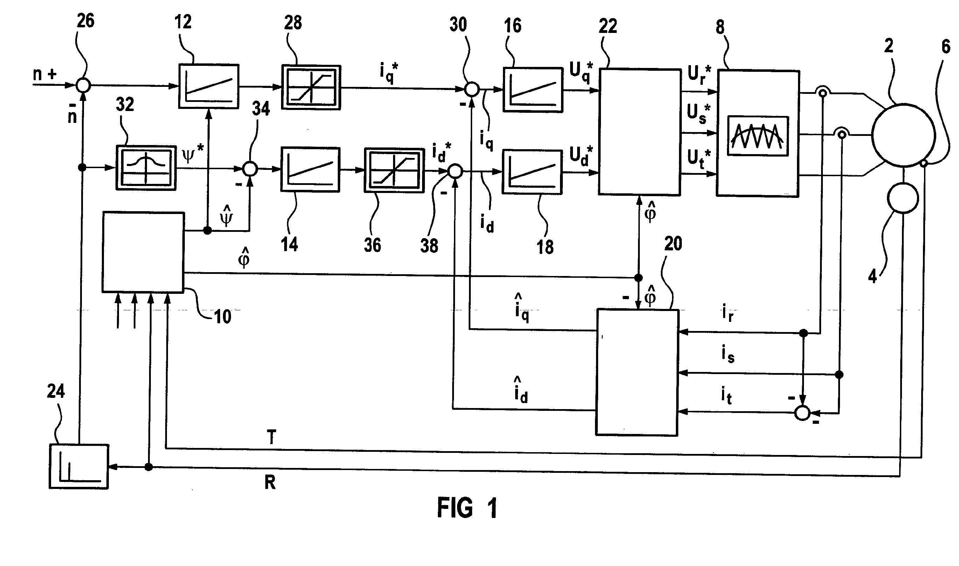

Zum besseren Verständnis des erfindungsgemäßen Verfahrens soll anhand der FIG 1 zunächst die Regelstruktur einer bekannten feldorientierten Regelung einer Asynchronmaschine 2 erläutert werden. Diese Regelstruktur enspricht der Regelstruktur der Fig. 6 der EP 0 840 441 A1. Diese Asynchronmaschine 2 weist einen Rotorlagegeber 4 und einen Temperaturgeber 6 auf und wird ständerseitig von einem Umrichter 8, insbesondere einem Spannungszwischenkreis-Umrichter, gespeist. Die feldorientierte Regelung dieses Umrichters 8 weist neben einem Flussrechner 10, einem Drehzahlregler 12, einem Flussregler 14, zwei Stromreglern 16 und 18 noch zwei Transformationseinrichtungen 20 und 22 auf. Der Ausgang des Rotorlagegebers 4 ist ausgangsseitig mit einem Differenzierglied 24 verknüpft, das ausgangsseitig mit einem invertierenden Eingang eines Vergleichers 26 eines Drehzahlregelkreises verbunden ist. Am nichtinvertierenden Eingang dieses Vergleichers 26 steht eine geforderte Drehzahl n* an, die auch als Drehzahl-Sollwert bezeichnet wird. Am Ausgang des Differenziergliedes 24 steht ein Drehzahl-Istwert n der Asynchronmaschine 2 an. Neben dem Vergleicher 26 und dem Drehzahlregler 12 weist dieser Drehzahlregelkreis einen Begrenzer 28 auf, an dessen Ausgang eine einzuprägende drehmomentbildende Stromkomponente $i_q^*$ ansteht. Diesen Drehzahlregelkreis ist ein Stromregelkreis nachgeschaltet, der neben dem Stromregler 16 auch noch einen Vergleicher 30 aufweist. Dieser nachgeschaltete Stromregelkreis wird auch als unterlagerter Regelkreis bezeichnet. Eine ermittelte drehmomentbildende Stromkomponente $i_q$ steht am invertierenden Eingang des Vergleichers 30 des Stromregelkreises an, wobei am Ausgang des Stromreglers 16 ein Sollwert einer Spannungskomponente $U_q^*$ senkrecht zur Flussrichtung ansteht.

Der Ausgang des Differenziergliedes 24 ist ebenfalls mit einem Kennliniengeber 32 verknüpft, der die Kennlinie eines Fluss-Sollwertes Ψ* in Abhängigkeit eines Drehzahl-Istwertes n aufweist. Somit steht am Ausgang dieses Kennliniengebers 32 ein zum Drehzahl-Istwert n korrespondierender Fluss-Sollwert Ψ* an. Dieser Fluss-Sollwert Ψ* wird einem Flussregelkreis zugeführt, der neben dem Flussregler 14 einen Vergleicher 34 und einen Begrenzer 36 aufweist. Am Ausgang dieses Flussregelkreises steht eine einzuprägende flussbildende Stromkomponente $i_d^*$ an, die einen weiteren unterlagerten Stromregelkreis zugeführt ist. Dieser weitere Stromregelkreis weist neben dem Stromregler 12 noch einen Vergleicher 38 auf. Eine ermittelte flussbildende Stromkomponente $i_d$ steht am invertierenden Eingang des Vergleichers 38 des weiteren unterlagerten Stromregelkreises an. Am Ausgang des Stromreglers 18 steht ein Sollwert einer Spannungskomponente $U_d^*$ in Flussrichtung an.

Der Flussregelkreis benötigt neben einem Fluss-Sollwert Ψ* auch noch einen Fluss-Istwert $\hat{\Psi}$ der von dem Flussrechner 10 geliefert wird. In diesem Flussrechner 10 ist beispielsweise eine Spannungsmodell und/oder ein Strommodell hinterlegt mit denen ein Modellfluss berechnet wird. Die polaren Komponenten Betrag $\hat{\Psi}$ und Winkel φ stehen an den beiden Ausgängen des Flussrechners 10 als Modellgrößen an, wobei die Modellgröße, auch als Schätzwert bezeichnet, mit einem Dach gekennzeichnet ist. Dieser Betrag $\hat{\Psi}$ des Modellläuferflusses wird dem invertierenden Eingang des Vergleichers 34 des Flussregelkreises zugeführt. Der Winkel $\hat{\varphi}$, auch als Rotorlage bezeichnet, des Modellläuferflusses wird jeweils der eingangs- und ausgangsseitigen Transformationseinrichtung 20 und 22 zugeführt. Mittels der eingangsseitigen Transformationseinrichtung 20 wird aus zwei gemessenen Ständerströmen $i_r$ und $i_s$ zwei feldorientierte Stromkomponenten $\hat{\imath}_d$ und $\hat{\imath}_q$ gebildet. Die feldorientierte Stromkomponente $\hat{\imath}_d$ ist in Flussrichtung, wogegen die feldorientierte Stromkomponente $\hat{\imath}_q$ senkrecht zur Flussrichtung verläuft. Da die in Flussrichtung verlaufende Stromkomponente für den Fluss verantwortlich ist, wird dieser auch als flussbildende Stromkomponente $i_d$ bezeichnet. Dagegen ist die senkrecht zur Flussrichtung verlaufende Stromkomponente $i_q$ für das Drehmoment der Maschine verantwortlich und wird deshalb auch als drehmomentbildende Stromkomponente $i_q$ bezeichnet. Da für die Transformation von ständerorientierten Messgrößen in feldorientierten Komponenten die Lage $\hat{\varphi}$ des Modellläuferflusses verwendet wird, sind die ermittelten feldorientierten Stromkomponenten $\hat{\imath}_d$ und $\hat{\imath}_q$ ebenfalls Modellgrößen.

An den Ausgängen der beiden unterlagerten Stromregelkreisen stehen Spannungskomponenten $U_d^*$ und $U_q^*$ eines feldorientierten Ständerspannungs-Raumzeigers an, mit dem die geforderten Stromkomponenten $i_d^*$ und $i_q^*$ in die Maschine eingeprägt werden können. Diese feldorientierten Spannungskomponenten $U_d^*$ und $U_q^*$ müssen wieder in ständerorientierte Größen transformiert werden. Deshalb weist die Regelstruktur ausgangsseitig die Transformationseinrichtung 22 auf, an deren Ausgängen die Sollwerte $U_r^*$, $U_s^*$ und $U_t^*$ der Phasenspannungen der Asynchronmaschine 2 anstehen. Anstelle der karthesischen Darstellung kann der Ständerspannungs-Raumzeiger auch mit polaren Komponenten dargestellt werden.

Wenn anstelle der Asynchronmaschine 2 eine permanenterregte Synchronmaschine verwendet wird, so wird der Flussregelkreis nicht mehr benötigt. Dadurch ist die einzuprägende feldbildende Stromkomponente $i_d^*$ Null. Da die in Flussrichtung verlaufende Stromkomponente $i_d$ den Fluss bzw. das magnetische Feld beeinflusst, wird diese auch als feldbildende Stromkomponente $i_d$ bezeichnet. Obwohl bei Motoren mit Reluktanzmoment das Drehmoment auch von der feldbildenden Stromkomponente $i_d$ beeinflusst wird, werden die üblichen Bezeichnungen der feldorientierten Regelung beibehalten.

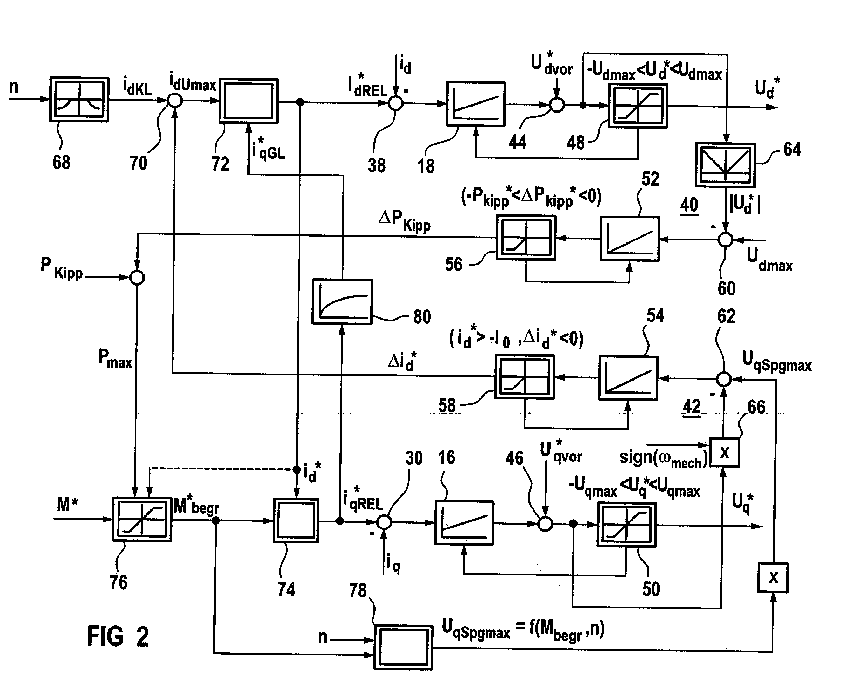

In der FIG 2 ist eine erste Ausführungsform einer Vorrichtung zur Durchführung des erfindungsgemäßen Verfahrens zur feldorientierten Regelung einer permanenterregten Synchronmaschine mit innenliegenden Magneten dargestellt. Gegenüber der Regelstruktur nach FIG 1 weist diese Regelstruktur für die d-und q-Achse der Maschine jeweils einen Spannungsregelkreis 40 und 42 auf. Außerdem ist eine geschlossene Stromschleife für die beiden einzuprägenden reluktanzbehafteten Stromkomponenten $i_{dREL}^*$ und $i_{gREL}^*$ in und senkrecht zur Flussrichtung des Läuferflusses der Synchronmaschine vorgesehen. Neben diesen genannten Ergänzungen weisen die unterlagerten Stromregelkreise jeweils zusätzlich ein Additionsglied 44 bzw. 46 und einen Begrenzer 48 bzw. 50 auf, die dem Stromregler 18 bzw. 16 nachgeschaltet sind. Am zweiten Eingang des Additionsgliedes 44 steht ein Vorsteuerwert $U_{dvor}^*$ an, der zum Beispiel gemäß folgender Gleichung

$$U_{dvor}^{*} = -\omega \cdot L_q \cdot i_{qREL}^{*} \qquad (1)$$

berechnet wird. Dieser Vorsteuerwert $U_{dvor}^{*}$ ist nicht unbedingt erforderlich. Der am Ausgang dieses Addiergliedes 44 anstehende Spannungskomponente $U_d^{*}$ in Flussrichtung wird mit dem nachgeschalteten Begrenzer 48 so begrenzt, dass der Spannungsbegrenzungswert $U_{dmax}$ nicht überschritten wird. Am zweiten Eingang des Addiergliedes 46 steht ebenfalls ein Vorsteuerwert $U_{qvor}^{*}$ an, der beispielsweise gemäß folgender Gleichung:

$$U_{qvor}^{*} = \omega \cdot L_d \cdot i_{dREL}^{*} + \omega \cdot \Psi \qquad (2)$$

berechnet wird. Auch dieser Vorsteuerwert $U_{qvor}^{*}$ wird nicht unbedingt benötigt. Die am Ausgang dieses Addiergliedes 46 anstehende Spannungskomponente $U_q^{*}$ senkrecht zur Flussrichtung wird ebenfalls mit dem Begrenzer 50 so begrenzt, dass der Spannungsbegrenzungswert $U_{qmax}$ nicht überschritten wird.

Der Spannungsregelkreis 40 bzw. 42 weist einen Spannungsmaximumregler 52 bzw. 54 mit nachgeschaltetem Begrenzer 56 bzw. 58 und einen Vergleicher 60 bzw. 62 auf. Mittels des Begrenzers 58 wird das Ausgangssignal des Spannungsmaximumreglers 54 auf einen zulässigen negativen Verringerungswert $\Delta i_d^{*}$ begrenzt. Das Ausgangssignal des Begrenzers 56 wird ebenfalls auf einen zulässigen negativen Verringerungswert $\Delta P_{Kipp}$ begrenzt. Da als Spannungsmaximumregler 52 und 54 jeweils ein I-Regler verwendet wird, erfolgt die Steuerung dessen I-Anteils über den Begrenzer 56 bzw. 58. Eine entsprechende Rückkopplung weisen jeweils ebenfalls die beiden unterlagerten Stromregelkreise auf. Diese Rückkopplungen sind nicht unbedingt notwendig, sondern zeigen nur eine Möglichkeit auf. Am invertierenden Eingang des Vergleichers 60 steht der Betrag der Spannungskomponente $U_d^{*}$ in Flussrichtung an, der mittels eines Betragsbildners 46 aus der am Ausgang des Begrenzers 48 anstehenden Spannungskomponente $U_d^{*}$ in Flussrichtung generiert wird. Am nichtinvertierenden Eingang dieses Vergleichers 60 steht ein maximaler Spannungsbegrenzungswert $U_{dmax}$ an.

Beim Spannungsregelkreis für die q-Achse der Maschine wird nicht wie beim Spannungsregelkreis für die d-Achse der Maschine ein Betragsbildner verwendet, sondern ein Multiplizierglied 66. Am zweiten Eingang dieses Multipliziergliedes 66 steht nur ein Vorzeichensignal der mechanischen Drehbewegung $\omega_{mech}$ des Läufers der permanenterregten Synchronmaschine an. Dadurch wird es möglich sein, das Vorzeichen gegenüber der EMK zu wechseln. Damit kann man dann bei positiver Drehzahl auch negative Werte für die Spannungskomponente $U_q^{*}$ senkrecht zur Flussrichtung einstellen. Am nichtinvertierenden Eingang dieses Vergleichers 62 steht hier kein maximaler Spannungsbegrenzungswert an, sondern ein von der Drehzahl n und einem begrenzten geforderten Drehmoment $M_{begr}^{*}$ abhängiger Spannungswert $U_{qSpgmax}$ an.

Um eine einzuprägende flussbildende Stromkomponente $i_d^{*}$ zu erhalten, wird zunächst in Abhängigkeit eines Kennliniengebers 68 und des ermittelten Drehzahl-Istwertes n eine feldbildende Stromkomponente $i_{dKL}$ generiert. Damit zu erkennen ist, dass diese feldbildende Stromkomponente von einer Kennlinie abhängig ist, ist der Index "d" mit "KL" erweitert worden. Dieser kennlinienbezogenen feldbildenden Stromkomponente $i_{dKL}$ wird der erzeugte Verringerungswert $\Delta i_d^{*}$ mittels eines Addiergliedes 70 aufgeschaltet und die so erzeugte feldbildende verminderte Stromkomponente $i_{dUmax}$ bei maximaler Spannung (Spannungsdecke) einer Recheneinrichtung 72 zugeführt. Am Ausgang dieser Recheneinrichtung 72 steht dann die einzuprägende feldbildende Stromkomponente $i_d^{*}$ an. Zur Ermittlung einer einzuprägenden reluktanzbehafteten drehmomentbildenden Stromkomponente $i_{qREL}^{*}$ wird ebenfalls eine Recheneinrichtung 74 mit vorgeschalteten Begrenzer 76 verwendet. Eingangsseitig am Begrenzer 76 steht ein angefordertes Moment M* an, das in Abhängigkeit des ermittelten Verringerungswertes $\Delta P_{Kipp}$ begrenzt wird. Dieser begrenzte Drehmomentwert $M_{begr}^{*}$ wird einerseits der Recheneinrichtung 74 und andererseits einer weiteren Recheneinrichtung 78 zugeführt. Der Ausgang der Recheneinrichtung 72 ist direkt mit einem weiteren Eingang der Recheneinrichtung 74 verbunden, wogegen der Ausgang dieser Recheneinrichtung 74 mittels eines Glättungsgliedes 80 mit einem weiteren Eingang der Recheneinrichtung 72 verknüpft ist.

In der Recheneinrichtung 72 wird in Abhängigkeit einer geglätteten einzuprägenden reluktanzbehafteten drehmomentbildenden Stromkomponente $i_{qGL}^{*}$ mit der folgenden Gleichung:

$$i_{dREL}^{*} = k_{DREL} \, | \, i_{qGL}^{*} \, | \qquad (3)$$

eine feldbildende reluktanzbehaftete Stromkomponente $i_{dREL}^{*}$ berechnet, bei der das Reluktanzmoment berücksichtigt wird. Der in dieser Gleichung angegebene Faktor $k_{DREL}$ muss so gewählt werden, dass beim Maximalstrom das maximale Drehmoment erzeugt wird. Der D-Faktor $k_{DREL}$ wird gemäß folgender Gleichung:

$$k_{DREL} = \frac{1}{\tan(\alpha)} \qquad (4)$$

berechnet, wogegen der Winkel $\alpha$ gemäß folgender Gleichung:

$$\alpha = \arccos\left[ -\frac{k_T}{\sqrt{2}6Z_p(L_d - L_q)i_{max}} - \sqrt{\frac{1}{2} + \left(\frac{k_T}{\sqrt{2}6Z_p(L_d - L_q)i_{max}}\right)^2} \right] \qquad (5)$$

*mit* $90° \leq \alpha \leq 135°$

berechnet wird. Dieser Winkel $\alpha$ kann auch messtechnisch bestimmt werden. Der D-Faktor $k_{DREL}$ ist bei einer permanenterregten Synchronmaschine immer negativ. Will man auch für kleinere Drehmomente den optimalen Strom einprägen, so muss der D-Faktor $K_{DREL}$ als Funktion des aktuellen Strombetrages verändert werden. D.h., in der angegebenen Gleichung für den Winkel $\alpha$ wird anstelle des konstanten maximalen Stromes $i_{max}$ der gemessene Strombetrag eingesetzt. Nachdem aus der einzuprägenden drehmomentbildenden Stromkomponente $i^*_{qREL}$ eine einzuprägende reluktanzbehaftete feldbildende Stromkomponente $i_{dREL}$ berechnet worden ist, muss diese Recheneinrichtung 72 zwischen der anstehenden verminderten Stromkomponente $i_{dUmax}$ und dieser berechneten Stromkomponente $i_{dREL}$ in Flussrichtung entscheiden, welche dieser beiden Stromkomponenten als einzuprägende feldbildende Stromkomponente $i^*_d$ ausgegeben werden muss. Bei dieser Auswahl wird immer der betragsmäßig größere Wert ausgewählt.

In der Recheneinrichtung 74 wird in Abhängigkeit dieser ermittelten einzuprägenden feldbildenden Stromkomponente $i^*_d$ mit der folgenden Gleichung:

$$i^*_{qREL} = M_{begr} / (k_T + k_{QREL} \bullet i^*_d) \qquad (6)$$

eine drehmomentbildende Stromkomponente $i^*_{qREL}$ berechnet, die das Reluktanzmoment berücksichtigt. Damit wird der momentenbildende Anteil des feldbildenden Stromes $i^*_d$ auch in der Berechnung des momentenbildenden Stromes $i^*_{qREL}$ berücksichtigt. Dabei wird der Q-Faktor $k_{QREL}$ gemäß folgender Gleichung:

$$k_{QREL} = 1{,}5 \bullet Z_p \bullet (L_d - L_q) \qquad (7)$$

aus Motordaten berechnet. Dieser Q-Faktor $K_{QREL}$ ist bei einer permanenterregten Synchronmaschine mit innenliegenden Magneten negativ. Aus dieser berechneten reluktanzbehafteten drehmomentbildenden Stromkomponente $i^*_{qREL}$ wird wieder eine einzuprägende feldbildende Stromkomponente $i^*_d$ ermittelt.

Da bei der Berechnung der feldbildenden Stromkomponente $i^*_d$ die drehmomentbildende Stromkomponente $i^*_{qREL}$ und umgekehrt verwendet wird, weist die Regelstruktur eine geschlossene Schleife für die beiden genannten Stromkomponenten $i^*_d$ und $i^*_{qREL}$ auf. Damit wird der optimale Betriebspunkt iterativ gefunden. Damit diese iterative Ermittlung des optimalen Betriebspunktes stabil verläuft, wird die drehmomentbildende Stromkomponente $i^*_{qREL}$ geglättet.

Damit erfolgt die Einstellung der beiden Stromkomponenten $i^*_d$ und $i^*_{qREL}$ wie folgt:

Zunächst wird aus dem Solldrehmoment M* ein momentenbildender Strom $i^*_{qREL}$ errechnet. Dieser Strom $i^*_{qREL}$ führt nach einer Glättung zu einem feldbildenden Strom $i^*_d$ wegen der Gleichung (3). Aus der ausgegebenen flussbildenden Stromkomponente $i^*_d$ wird mittels der Gleichungen (6) und (7) ein veränderter $i^*_{qREL}$ ermittelt, so dass der momentenbildende Strom verkleinert werden muss, was wiederum zu einem veränderten feldbildenden Strom $i^*_d$ führt, bis dieser Vorgang eingeschwungen ist.

Anstelle dieses iterativen Vorgangs gibt es auch eine nichtiterative Möglichkeit. Dabei wird aus dem Sollmoment M* ein Strombetrag |i| errechnet. Dieser Strombetrag wird auf einen feld- und einen momentenbildenden Strom optimal aufgeteilt, wobei der Winkel $\alpha$ gemäß der Gleichung (5) und die Kreisfunktionen Sinus und Cosinus verwendet werden. Anschließend wird überprüft, ob nicht der feldbildende Strom $\Delta i^*_d$ der Spannungsregelkreises 42 kleiner (negativer) als die so ermittelte Komponente ist. Falls dies der Fall ist, wird der Wert $\Delta i^*_d$ des Spannungsregelkreises 42 übernommen und der momentenbildende Strom muss falls nötig nochmals aufgrund der Strombegrenzung mit folgender Gleichung:

$$\left| i_q^* \right| \le \sqrt{i_{max}^2 - i_d^{*2}} \qquad (8)$$

neu berechnet werden.

Der Spannungs-Sollwert $U_{qSpgmax}$ des Spannungsregelkreises 42 wird in Abhängigkeit des begrenzten Drehmoment-Sollwertes $M^*_{begr}$ und eines ermittelten Drehzahl-Istwertes n mittels der Recheneinheit 78 berechnet. In dieser Recheneinrichtung 78 ist folgende Gleichung:

$$U_{qSpg\,max} \approx U_{max} \sqrt{1 - \left( \frac{2\pi n \bullet M^*_{begr}}{P_{max}} \right)^2} + \left( \frac{2\pi n \bullet M^*_{begr}}{P_{max}} \right) U_{q\,min} \qquad (9)$$

hinterlegt, mit der der Spannungs-Sollwert $U_{qSpgmax}$ drehzahl- und momentabhängig berechnet wird. Die Vorgabe des Spannungs-Sollwertes $U_{qSpgmax}$ soll dazu führen, dass auch bei Strombegrenzung das maximale Drehmoment $M_{max}$ gefunden wird. Dazu wird das Drehmoment M* unter der Voraussetzung, dass die Maximalspannung $U_{max}$ erreicht wird, berechnet. Um die Rechnung einfacher zu halten, werden die Spannungsabfälle aufgrund der Widerstände vernachlässigt und nur stationäre Anteile berücksichtigt. Der Vorteil dieser spannungsbasierenden Vorgabe der Stromkomponenten gegenüber einer direkten Stromvorgabe ist dieser, dass man eine weitgehende Unabhängigkeit von den Motorinduktivitäten in den d- und q-Achsen der Synchronmaschine erhält.

Mit diesem erfindungsgemäßen Verfahren wird das Drehmoment/Leistungsmaximum gefunden. Für den unteren Drehzahlbereich wird vor der Spannungsdecke die Strombegrenzung erreicht. Hier wird mit der feldbildenden Stromkomponente $i_d^*$ gemäß Gleichung (3) das maximalmögliche Drehmoment erzielt. Die Berechnung für den Spannungs-Sollwertes $U_{qSpgmax}$ für den Spannungsregelkreis 42 ergibt Werte, die nahe an der maximalen Spannung $U_{max}$ liegen. Deshalb müssen die Spannungsregler 52 und 54 gar nicht eingreifen. Im nächsten Drehzahlbereich, wobei die Spannungsdecke erreicht wird, wird das maximale Drehmoment erreicht, wenn Strom- und Spannungsgrenze gleichzeitig erreicht werden. Um den Strombetrag überhaupt erhöhen zu können, muss man eventuell die einzuprägende reluktanzbehaftete feldbildende Stromkomponente $i_{dREL}^*$ negativer machen. Die Verkleinerung dieser Stromkomponente $i_{dREL}^*$ wird über die lastabhängige Vorgabe des Spannungs-Sollwertes $U_{qSpgmax}$ des Spannungsregelkreises 42 erreicht. Ab einer bestimmten Drehzahl n würde ein Fahren mit maximalen Strom und Spannung dazu führen, dass der feldbildende Strom $i_d^*$ überwiegt und damit der momentenbildende Strom $i_{qREL}^*$ unterhalb des Optimums reduziert werden muss. Hier wird mit minimaler Spannung $U_{qmin}$ senkrecht zur Flussrichtung das Optimum erreicht. Dies ist der Wert, der sich beim Kippleistung $P_{max}$ einstellt.

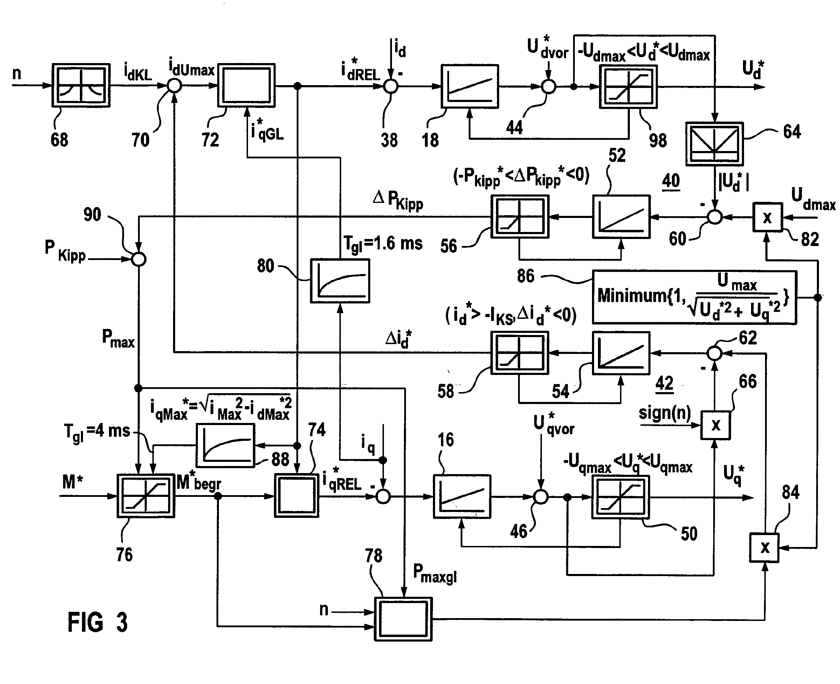

In der FIG 3 ist eine vorteilhafte Ausführungsform der Regelstruktur nach FIG 2 näher dargestellt. Diese Regelstruktur unterscheidet sich von der nach FIG 2 dadurch, dass die Spannungs-Sollwerte $U_{dmax}$ und $U_{qSpgmax}$ der Spannungsregelkreise 40 und 42 korrigiert werden. Dazu sind zwei Multiplizierglieder 82 und 84 vorgesehen. Die Spannungs-Sollwerte $U_{dmax}$ und $U_{qSpgmax}$ stehen jeweils an einem Eingang dieser Multi-plizierglieder 82 und 84 an. Ausgangsseitig sind diese Multiplizierglieder 82 und 84 jeweils mit einem nichtinvertierenden Eingang des Vergleichers 60 bzw. 62 des Spannungsregelkreises 40 bzw. 42 verknüpft. Die zweiten Eingänge dieser Multiplizierglieder 82 und 84 sind jeweils mit einem Ausgang einer weiteren Recheneinrichtung 86 verknüpft. Die Spannungs-Sollwerte $U_{dmax}$ und $U_{qSpgmax}$ werden so korrigiert, dass nach vektorieller Addition der Spannungskomponenten $U_d^*$ und $U_q^*$ in und senkrecht zur Flussrichtung der Spannungs-Raumzeiger für die permanenterregte Synchronmaschine einen maximalen Betrag aufweist. Dies wird mit dem angegebenen Faktor erreicht.

Ein weiterer Unterschied dieser Regelstruktur zur Regelstruktur nach FIG 2 besteht darin, dass anstelle der einzuprägenden reluktanzbehafteten drehmomentbildenden Stromkomponente $i_q^*$ eine ermittelte drehmomentbildende Stromkomponente $i_q$ bei der Berechnung einer einzuprägenden reluktanzbehafteten feldbildenden Stromkomponente $i_{dREL}^*$ verwendet wird. Dadurch wird bei der Berücksichtigung des Reluktanzmomentes der tatsächliche Zustand in der permanenterregten Synchronmaschine mit innenliegenden Magneten verwendet. Für gegebenenfalls auftretende Stabilitätsprobleme ist neben dem Glättungsfilter 80 ein weiteres Glättungsfilter 88 vorgesehen. Außerdem ist der mit dem Spannungsregelkreis 40 generierte Verringerungswert $\Delta P_{Kipp}$ über einem Additionsglied 90 nicht nur dem Begrenzer 76, sondern auch der Recheneinrichtung 78 zugeführt. Dadurch wird der Spannungs-Sollwert $U_{qSpgmax}$ für den Spannungsregelkreis 42 gemäß folgender Gleichung:

$$U_{qSpg_{max}} = U_{max}\sqrt{1-[P^*/P_{max\ gL}]^2}$$

berechnet, der anschließend korrigiert wird. Am zweiten Eingang des Additionsgliedes 90 steht wie in der FIG 2 der Wert der Kippleistung $P_{kipp}$ an, wobei ausgangsseitig dann die maximale Leistung $P_{max}$ ansteht.

Mit dem erfindungsgemäßen Verfahren wird die Leistungsausbeute bei einer permanenterregten Synchronmaschine mit innenliegenden Magneten unter Berücksichtigung der Strom- und Spannungsbegrenzungen maximiert. D.h., mittels diesem Verfahren werden in allen Betriebsbereichen die optimalen Betriebspunkte eingestellt, wobei man ohne Betriebsumschaltungen auskommt und die Sättigung berücksichtigt wird.

## Patentansprüche

1. Verfahren zur feldorientierten Regelung einer permanenterregten Synchronmaschine mit Reluktanzmoment mit folgenden Verfahrensschritten:

   a) Ermittlung jeweils einer einzuprägenden fluss- und drehmomentbildenden Stromkomponente ($i_d^*,i_q^*$) in Abhängigkeit einer ermittelten Drehzahl (n) und eines geforderten Momentes (M*),
   b) Ermittlung jeweils einer Spannungskomponente ($U_d^*,U_q^*$) in und senkrecht zur Flussrichtung in Abhängigkeit dieser einzuprägenden fluss- und drehmomentbildenden Stromkomponenten ($i_d^*,i_q^*$) und von feld- und drehmomentbildenden Stromkomponenten ($i_d,i_q$) eines ermittelten Ständerstrom-Raumzeigers der permanenterregten Synchronmaschine,
   c) Erzeugung jeweils eines Verringerungswertes ($\Delta P_{Kipp},\Delta i_d^*$) in Abhängigkeit jeweils einer ermittelten Abweichung der Werte dieser beiden Spannungskomponenten ($U_d^*,U_q^*$) von einem vorbestimmten Spannungsgrenzwert ($U_{dmax},U_{Spgmax}$) zur Begrenzung des geforderten Drehmomentes (M*) und einer Vorgabe der feldbildenden Stromkomponente ($i_{dUmax}$),
   d) Erzeugung jeweils einer reluktanzbehafteten feld- und drehmomentbildenden Stromkomponente ($i_{dREL}^*$, $i_{qREL}^*$) in Abhängigkeit der einzuprägenden reluktanzbehafteten dreh- und feldbildenden Stromkomponenten ($i_{qREL}^*,i_{dREL}^*$) und
   e) Erzeugung eines Ständerspannungs-Raumzeigers der permanenterregten Synchronmaschine aus den ermittelten Spannungskomponenten ($U_d^*,U_q^*$) in und senkrecht zur Flussrichtung.

2. Verfahren nach Anspruch 1, **dadurch gekennzeichnet, dass** die Spannungskomponenten ($U_d^*,U_q^*$) derart korrigiert werden, dass deren vektorielle Addition einen maximalen Wert eines zugehörigen Spannungs-Raumzeigers ergibt.

3. Verfahren nach Anspruch 1,
   **dadurch gekennzeichnet, dass** zur Erzeugung der reluktanzbehafteten feldbildenden Stromkomponente ($i_{dREL}^*$) anstelle der einzuprägenden reluktanzbehafteten drehmomentbildenden Stromkomponente ($i_{qREL}^*$) die drehmomentbildende Stromkomponente ($i_q$) des ermittelten Ständerstrom-Raumzeigers der permanenterregten Synchronmaschine verwendet wird.

4. Verfahren nach einem der vorgenannten Ansprüche,
   **dadurch gekennzeichnet, dass** zur Erzeugung der einzuprägenden reluktanzbehafteten feldbildenden Stromkomponente ($i_{dREL}^*$) die einzuprägende reluktanzbehafteten drehmomentbildende Stromkomponente ($i_{qREL}^*$) bzw. die drehmomentbildende Stromkomponente ($i_q$) des ermittelten Ständerstrom-Raumzeigers geglättet wird.

5. Verfahren nach einer der Ansprüche 1 bis 4,
   **dadurch gekennzeichnet, dass** die einzuprägende reluktanzbehaftete feldbildende Stromkomponente ($i_{dREL}^*$) gemäß folgender Gleichung:

$$i_{dREL}^* = k_{DREL} \bullet |i_{qREL}^*|$$

mit $K_{DREL}$: D-Faktor
berechnet wird.

**6.** Verfahren nach einem der Ansprüche 1 bis 4,
**dadurch gekennzeichnet, dass** die einzuprägende reluktanzbehaftete drehmomentbildende Stromkomponente ($i^*_{qREL}$) gemäß folgender Gleichung:

$$i^*_{qREL} = M_{begr} / (k_T + k_{QREL} \bullet i^*_d)$$

mit $K_{QREL}$: Q-Faktor
berechnet wird.

**7.** Verfahren nach Anspruch 5,
**dadurch gekennzeichnet, dass** der D-Faktor ($k_{DREL}$) gemäß folgender Gleichung:

$$k_{DREL} = \frac{1}{\tan(\alpha)}$$

und wobei der Winkel ($\alpha$) gemäß folgender Gleichung:

$$\alpha = \arccos\left[ -\frac{k_T}{\sqrt{2}6Z_p\left(L_d - L_q\right)i_{max}} - \sqrt{\frac{1}{2} + \left(\frac{k_T}{\sqrt{2}6Z_p\left(L_d - L_q\right)i_{max}}\right)^2} \right]$$

berechnet wird.

**8.** Verfahren nach Anspruch 6,
**dadurch gekennzeichnet, dass** der Q-Faktor ($k_{QREL}$) gemäß folgender Gleichung:

$$k_{QREL} = 1,5 \bullet Z_p \bullet (L_d - L_q)$$

mit

$Z_p$:    Polpaarzahl
$L_d$:    Induktivität in der d-Achse der Synchronmaschine
$L_q$:    Induktivität in der q-Achse der Synchronmaschine

berechnet wird.

**9.** Verfahren nach einem der vorgenannten Ansprüche,
**dadurch gekennzeichnet, dass** die einzuprägende reluktanzbehaftete feldbildende Stromkomponente ($i^*_{dREL}$) zur Begrenzung des geforderten Drehmoment (M*) verwendet wird.

**10.** Verfahren nach einem der vorgenannten Ansprüche,
**dadurch gekennzeichnet, dass** zur Ermittlung der Spannungskomponenten ($U^*_d$, $U^*_q$) in und senkrecht zur Fluss-richtung des Läuferflusses ($\Psi$) der permanenterregten Synchronmaschine jeweils ein Vorsteuerwert ($U^*_{dvor}$ $U^*_{qvor}$) verwendet wird.

**11.** Verfahren nach einem der vorgenannten Ansprüche,
**dadurch gekennzeichnet, dass** der vorbestimmte Spannungsgrenzwert ($U_{qSpgmax}$) für die Spannungskompo-nente ($U^*_q$) senkrecht zur Flussrichtung vom begrenzten geforderten Leistung (P*) und der ermittelten Drehzahl (n) abhängig ist.

**12.** Verfahren nach einem der vorgenannten Ansprüche,
**dadurch gekennzeichnet, dass** zur Erzeugung eines Verringerungswertes ($\Delta i_d^*$) zur Begrenzung der kennlinienbehafteten flussbildenden Stromkomponente ($i_{dUmax}$) das Vorziehen der Spannungskomponente ($U_q^*$) senkrecht zur Flussrichtung aufgrund der Drehrichtung verwendet wird.

**13.** Verfahren nach Anspruch 10,
**dadurch gekennzeichnet, dass** der Vorsteuerwert ($U_{dvor}^*$) bei der Ermittlung der Spannungskomponente ($U_d^*$) in Flussrichtung gemäß folgender Gleichung:

$$U_{dvor}^* = -\omega \cdot L_q \cdot i_{qREL}^*$$

mit

$\omega$:  Kreisfrequenz, mit der sich das Läuferfeld dreht
$L_q$:  Induktivität in der q-Achse der Synchronmaschine
$i_{qREL}^*$  einzuprägende reluktanzbehaftete drehmomentbildende Stromkomponente

berechnet wird.

**14.** Verfahren nach Anspruch 10,
**dadurch gekennzeichnet, dass** der Vorsteuerwert ($U_{qvor}^*$) bei der Ermittlung der Spannungskomponente ($U_q^*$) senkrecht zur Flussrichtung gemäß folgender Gleichung:

$$U_{qvor}^* = \omega \cdot L_d \cdot i_{dREL}^* + \omega \cdot \Psi$$

mit

$\omega$:  Kreisfrequenz, mit der sich das Läuferdrehfeld dreht
$L_d$:  Induktivität in der d-Achse der Synchronmaschine

berechnet wird.

FIG 1

EP 1 317 060 A2

FIG 2

FIG 3

EP 1 317 060 A2